# EUROPEAN PATENT SPECIFICATION

(11) **EP 1 828 033 B1**
(45) Date of publication and mention of the grant of the patent: **04.05.2011**
(21) Application number: 05825386.5
(22) Date of filing: 20.12.2005
(51) Int. Cl.: B65G 47/76

(54) **DEVICE FOR SELECTIVELY DIVERTING PRODUCTS SIDEWAYS FROM A CONVEYOR**
VORRICHTUNG ZUM GEZIELTEN UMLEITEN VON PRODUKTEN ZUR SEITE VON EINER FÖRDEREINRICHTUNG
DISPOSITIF POUR DERIVER DE FACON SELECTIVE ET DANS LE PLAN LATERAL DES PRODUITS A PARTIR D'UN CONVOYEUR

(30) Priority: 24.12.2004 NL 1027879
(43) Date of publication of application: 05.09.2007
(73) Proprietor: VANDERLANDE INDUSTRIES NEDERLAND B.V., 5466 RB Veghel (NL)
(72) Inventor: Van Schaijk, Erwin Hendrikus Petrus Martinus J., NL-5381 GD Vinkel (NL); Van Der Goor, Jacobus Marie, NL-5674 SH Nuenen (NL)
(74) Representative: Dorna, Peter
(86) International application number: PCT/NL2005/000875
(87) International publication number: WO 2006/068470

(56) References cited:
- US-A- 3 104 755
- US-A- 5 988 356

## Description

The present invention relates to a device for selectively diverting products sideways from a load-bearing conveying surface of a conveyor according to the preamble of claim 1.

When products such as pieces of luggage at airports are to be sorted, it is usually necessary to divert products sideways from a conveyor to a branch at the location of said branch. Other products, on the other hand, must pass the branch without impediment. It is known to use guides at the location of the branch for this purpose, which guides are movable between a passive position, in which the guide extends beside the conveyor in question so as to allow products present on the conveyor to pass freely, and an active position, in which the guide extends at least partially, usually at an angle in forward direction, above the conveyor in question so as to divert products on the conveyor sideways from the conveyor in the direction of the branch. In the active position, the guides form a blockade, as it were, for the products on the conveyor, forcing the products in the direction of the branch and preventing the products from remaining on the conveyor. In addition to that it is known to use pusher means, which push the product in question sideways in the direction of the branch the moment said product passes.

When guides which are movable above the conveyor are used, it is known to provide these guides with vertically oriented endless guide belts functioning as a guide surface, which are driven in such a manner that the movement of the guide belts includes a component in the direction of movement of the conveyor. In order to achieve that all products to be diverted, irrespective of their dimensions, are actually diverted from the conveyor in the direction of the branch, the guide preferably extends over the full width of the conveyor in the active position, so that products cannot pass the guide in the active position without being diverted in the direction of the branch.

US patent US 6,607,065 B2 describes a device in which use is made of two guides that can pivot at ends remote from each other, about pivot axes located at two opposite longitudinal sides of the conveyor, between an active position, in which the guides are collineal and the guides jointly extend over the full width of the conveyor, and a passive position, in which the guides extend along the conveyor on opposite longitudinal sides thereof. The two guides are provided with vertical endless guide belts, which function as a moving guide surface for the products that are to be diverted from the conveyor. An advantage of this device is the fact that the lengths of the individual guides are relatively short, so that pivoting to the active position involves a limited amount of mass inertia forces, but that nevertheless the guides together screen the full width. A drawback, however, is the fact that because of the use of two guides and the required transmissions therebetween, the device is highly complex and, in addition, takes up space on both longitudinal sides of the conveyor as well as on the bottom side thereof. Moreover, the use of two opposite guides involves the risk of products finding their way between the ends of the guides, so that the products cannot be discharged sideways as intended and/or are damaged.

On the other hand, a device as referred to in the introduction is known from US patent US 3,104,755. Said document discloses a roller conveyor comprising a branch that extends transversely thereto. Products can be supplied in the direction of branch on the roller conveyor from two opposite sides of the roller conveyor. At the branch, a device provided with two mirror-symmetrical guides is disposed, whose guide surfaces are made up of vertically oriented guide belts, which are each passed over three pulleys. The ends of the guides are coupled via a gear transmission, in such a manner that in a passive position the guide surfaces of the two guides are disposed in collinear relationship beside the roller conveyor, whilst in the active position of the guides the guide surfaces define a V-shape above the roller conveyor, each guide defining one leg of the V-shape, with the point of the V-shape extending above the roller conveyor and the two guides being pivoted in opposite directions about pivot axes located beside the roller conveyor. Upon pivoting of the guides to the active position, the distance between the two pulleys that define the guide surface increases, whilst the other pulley moves in the direction of the imaginary connecting line between the two pulleys, so that on the one hand the length of the guide surface increases, whilst on the other hand the total length of the path that each guide belt travels about the three pulleys remains the same. To effect said pivoting between the passive position and the active position, the device is provided with a pneumatic reciprocating cylinder, which pivots a shaft member which is co-axial with the pivot axis of one of the two guides and which is rigidly connected to the guide in question, so that not only the shaft member but also the associated guide is pivoted. Because of the mechanical connection at the end of the guides, which extend above the roller conveyor in the active position, the other guide pivots along with said guide to the same extent, albeit in opposite direction. The guide on which the pneumatic cylinder does not act directly is provided with a driving motor for driving the guide belt thereof, which drive unit is connected to the guide belt of the other guide via the gear transmission at the ends of the guides that extend above the roller conveyor in the active position, so that the guide belts of the other guide are driven as well, albeit in opposite direction.

An important drawback of the device according to US 3,104,755 is the fact that said device has a considerable overall length and width. This is objectionable in particular when branch points are located relatively close together and consequently such devices must be arranged relatively close together along the conveyor.

The object of the present invention is to provide a device as referred to in the introduction which extends only on one side of the conveyor, at least in the passive position, and which has a limited overall length on the side in question. In order to accomplish that object, a device according to claim 1 is provided.

The use of such an actuating element, which may In fact form part of the length-adjusting means as well as of the pivoting means, enables a constructionally simple and, partly as a result thereof, compact embodiment of the device according to the invention.

Within the framework of the attempts to obtain a compact construction of limited overall length, it is furthermore preferable if said first further vertical pivot axis is located on the same side of the conveyor as the vertical pivot axis, and/or the diverter element pivots In the opposite direction between the passive position and the active position when the actuating element pivots between the first position at the second position.

Also with a view to limiting the overall length, the entire actuating element preferably extends between the ends of the diverter element, seen In the direction of transport.

For the sake of constructional simplicity, the actuating element is preferably at least substantially elongated and/or rectilinear in shape.

In addition to that, the actuating element is preferably made up of a rigid arm for the sake of constructional simplicity.

Alternatively it may be very advantageous if the actuating element is made up of an extensible arm, so that in particular said increasing or decreasing of the distance between the pivot axis and one end of the diverter element can be effected in a simple manner.

To keep the dimensions of the actuating element within bounds, it is preferable if the engagement by the actuating element on the movable part of the diverter element takes place on a side of the movable part of the diverter element that faces towards the pivot axis.

As regards the guide belt, it is preferably an endless belt.

In connection with the change in length that the diverter element undergoes upon pivoting from the active position it is preferable if the guide belt is passed at least over a third pulley which is rotatable about a vertical axis of rotation and which is movable between a starting position and an end position for keeping the length of the path along which the guide belt moves at least substantially constant during said increasing or decreasing of the distance between the pivot axis and one end of the diverter element.

Quite preferably, the third pulley can move reciprocatingly beside the conveying surface between the starting position and the end position. This implies that the third pulley need not form part of the diverter element, so that this third pulley will not affect the mass inertia effects caused by the pivoting of the diverter element between the active position and the passive position. It should be realised in this connection that the handling capacity is to a significant extent determined by the time involved in said pivoting of the diverter element from the passive position to the active position and vice versa, since said time is also indicative of the minimum spacing that needs to be maintained between two successive products on the conveyor. The quicker the diverter element can pivot to and fro, the smaller the required spacing between the products and/or the higher the conveyor velocity to be used.

The characteristic aspects of the latter preferred embodiment can also be used with a device according to the prior art for that matter. In such a case, a device is provided for selectively diverting products sideways from a load-bearing surface of a conveyor, comprising a diverter element provided with a guide belt that can be driven by drive means, which belt is passed over two pulleys at ends of the diverter element, which pulleys are rotatable about vertical axes of rotation, one of which two pulleys is rotatable with respect to a base part of the diverter element and the other of which two pulleys is rotatable with respect to a part of the diverter element that is movable with respect to the base part, pivoting means for pivoting the diverter element reciprocatingly about a vertical pivot axis extending on one side of the conveyor, between a passive position, in which the diverter element extends beside the conveying surface so as to allow products on the conveying surface to pass freely, and an active position, in which the diverter element extends at least partially above the conveying surface for diverting products on the conveying surface sideways from said conveying surface, and length-adjusting means for increasing the distance between the pivot axis and one end of the diverter element upon pivoting from the passive position to the active position and decreasing the distance between the pivot axis and the end of the diverter element upon pivoting from the active position to the passive position, wherein the movable part of the diverter element moves with respect to the base part of the diverter element so as to increase or decrease the distance between the pivot axis and the end of the diverter element, wherein the guide belt is passed at least over a third pulley which is rotatable about a vertical axis of rotation and which can move reciprocatingly beside the conveying surface between a starting position and an end position for keeping the length of the path along which the guide belt moves at least substantially constant during said increasing or decreasing of the distance between the pivot axis and one end of the diverter element.

Furthermore preferably, the device furthermore comprises mechanical transmission means for moving the third pulley between the starting position and the end position in response to the increase or decrease of the distance between the pivot axis and one end of the diverter element. In this way no separate drive means are required for moving the third pulley.

A preferred embodiment that is constructionally advantageous because of its simplicity is characterized in that the transmission means comprise a first transmission gear, a first transmission element, a second transmission gear and a second transmission element, wherein the first transmission element is connected to the movable part of the diverter element on the one hand and co-operates with the first transmission gear on the other hand, the second transmission element is connected to the third pulley on the one hand and to the second transmission gear on the other hand, and wherein the first transmission gear and the second transmission gear are arranged for joint rotation. The first and/or the second transmission gear may be configured as gear wheels, for example.

The joint rotation of the first transmission gear and the second transmission gear can be realised in an advantageous manner if the first transmission gear and the second transmission gear are collinear, in which case the first transmission gear and the second transmission gear are furthermore preferably made up of one common transmission gear. Thus, the first transmission element and the second transmission element engage different parts of the common transmission gear.

In a highly preferred embodiment, at least one of said first transmission gear and said second transmission gear is collinear with the pivot axis. This achieves that said at least one transmission element that is collinear with the pivot axis will not move with respect to the diverter element upon pivoting of the diverter element.

From a constructional point of view it is furthermore greatly preferred if at least one of said first transmission element and said second transmission element is of an elongated, flexible, preferably endless type.

According to another preferred embodiment, the movable part and the base part each comprise two pulleys. Thus, the length of the path along which the guide belt extends can be kept constant in a simple manner in spite of the movement of the movable parts of the diverter element with respect to the base part.

The two pulleys of the base part and/or of the movable part are preferably positioned at fixed positions relative to each other for reasons of constructional simplicity.

The advantages of the present invention come out well in particular if the diverter element extends over the full width of the conveyor in the active position, as a result of which a product cannot pass the diverter element in the active position, irrespective of the dimensions of the product in question, but will be diverted sideways from the conveyor.

The invention will now be explained in more detail by means of a description of a number of preferred embodiments of the Invention.
Figures 1a, 1b and 1c are a top plan view, a side view and a front view, respectively, of a first embodiment of a device according to the invention in a passive position thereof;
Figures 2a, 2b and 2c are a top plan view, a side view and a front view, respectively, of the first embodiment of a device according to the invention in an active position thereof;
Figures 3a and 3b are isometric views of the device of figures 1a-1c and the device of figures 2a-2c, respectively, in a passive position and in an active position thereof, respectively;
Figure 4 is an isometric view of a fixed part of the diverter element as used in the first preferred embodiment;
Figure 5 is an isometric view of a movable part of the diverter element as used in the first preferred embodiment;
Figures 6a, 6b and 6c are a top plan view, a side view and a front view, respectively, of a second embodiment of a device according to the invention in a passive position thereof;
Figures 7a, 7b and 7c are a top plan view, a side view and a front view, respectively, of the second embodiment of a device according to the Invention in an active position thereof;
Figures 8a and 8b are isometric views of the device as shown in figures 6a-6c and of the device as shown In figures 7a-7c, respectively. In a passive position and in an active position thereof, respectively;
Figure 9 is an isometric view of a fixed part of the diverter element as used In the second preferred embodiment;
Figure 10 is an isometric view of a movable part of the diverter element as used in the second preferred embodiment;
Figures 11-13 are schematic top plan views of three embodiments of a device, not forming part of the invention.

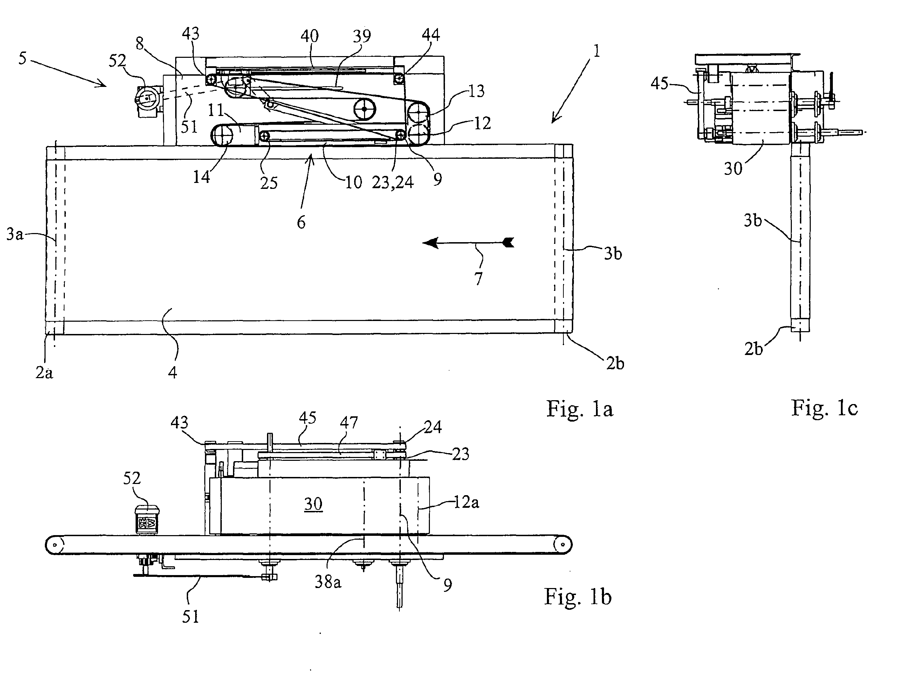

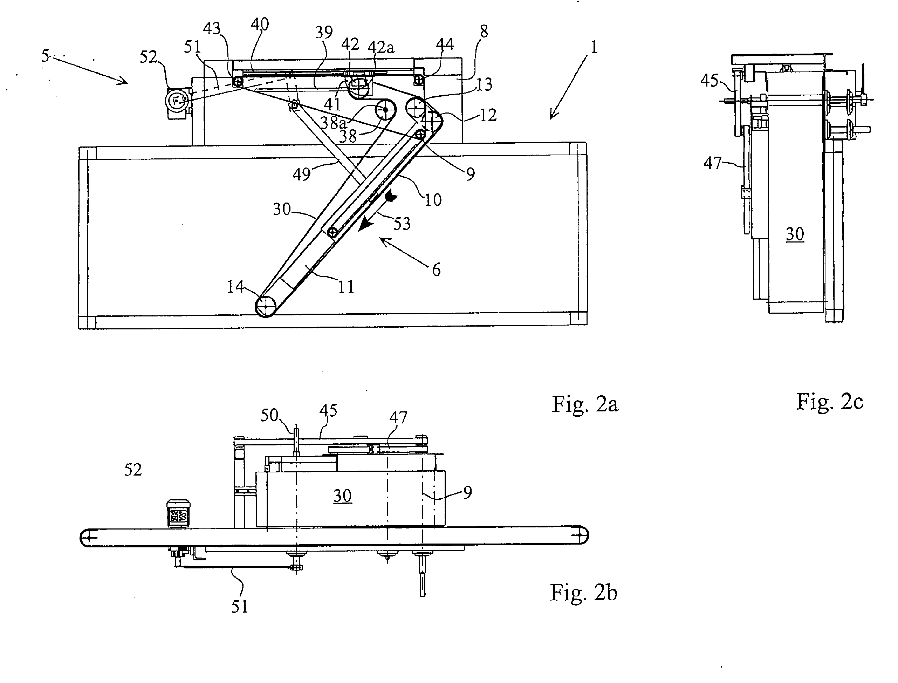

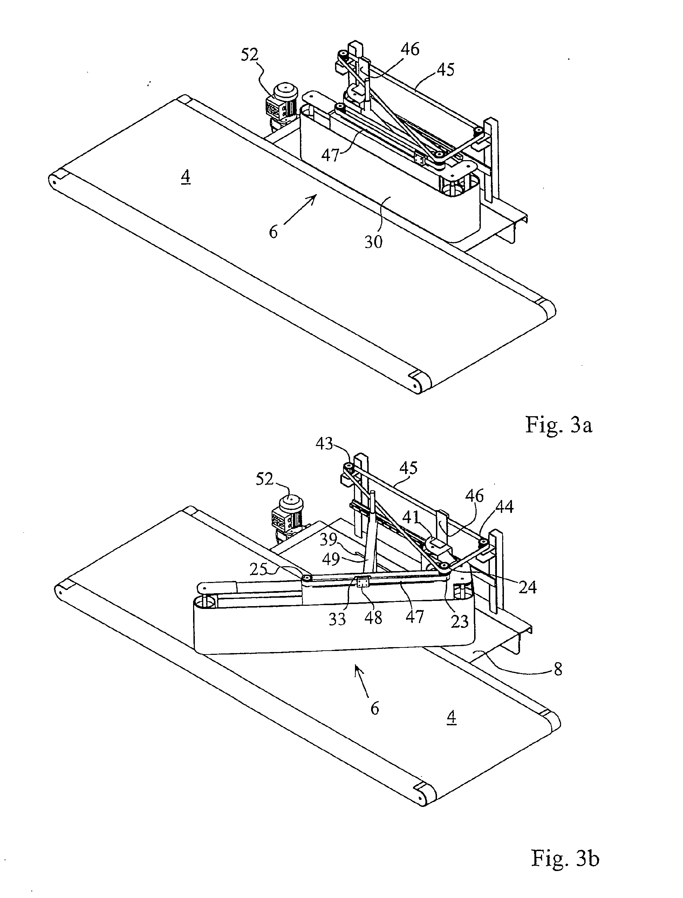

Figures 1a-1c and figure 3 are various views of a first preferred embodiment of a device according to the invention in a passive position thereof. The device comprises a belt conveyor 1 provided with a conveyor belt 4 that is passed over two spaced-apart pulleys 2a and 2b having central axes or axes of rotation 3a and 3b, respectively. The conveyor belt 4 is driven by drive means (not shown) for transporting products such as pieces of luggage, for example suitcases and the like, in the direction of transport on the conveyor belt 4. A diverting device 5 is disposed beside the belt conveyor 5. The diverting device 5 is provided with a diverter element 6 that extends parallel to and along the conveyor belt 4 in the passive position, but which can pivot to the active position as shown in figures 2a-2c and figure 3b, in which the diverter element has pivoted through an angle of about 45° about the vertical pivot axis 9, with the diverter element extending forwards at an angle over the entire width of the conveyor belt 4. On account of the obliquely forward orientation of the diverter element 6, products being conveyed to the diverter element in the active position by the conveyor belt 4 will be forced sideways towards the longitudinal side of the belt conveyor 1 opposite the longitudinal side of the conveyor 1, where the diverting device is disposed. The products that have been diverted sideways from the conveyor can be intercepted by a conveyor branching off therefrom, for example a conveyor in the form of a chute. In the active position of the diverter element 6, said element has a greater length than in the passive position. The manner in which said pivoting of the diverter element 6 and said adjustment of the length thereof is realised will become apparent hereinafter.

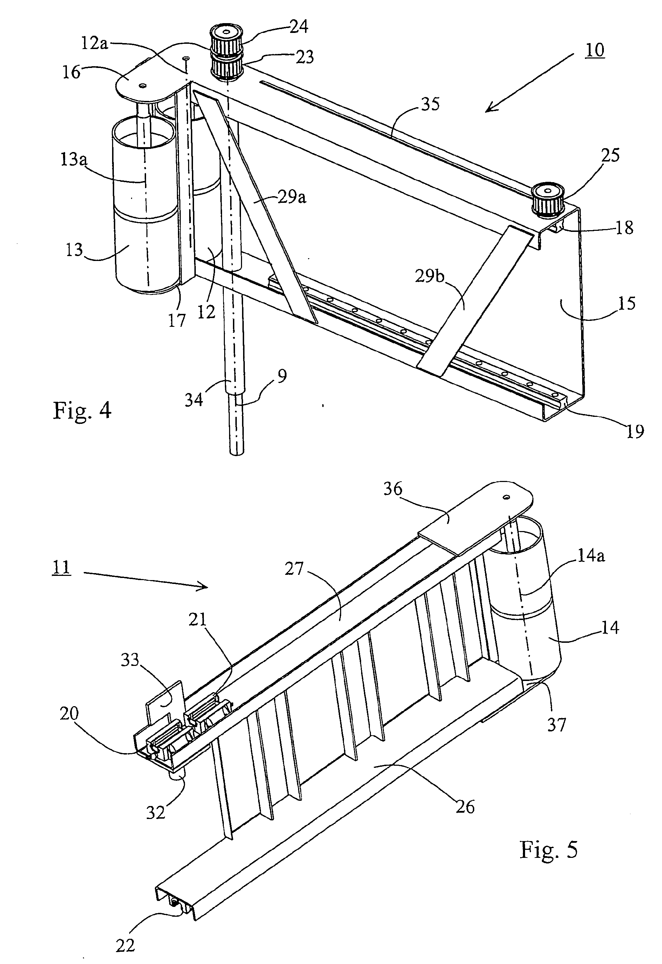

The diverter element 6 comprises a fixed arm 10 (figure 4) and an arm 11 (figure 5) that is movable with respect to the fixed arm 10 in the longitudinal direction thereof. The fixed arm 10 comprises an elongated C-shaped section 15. To increase the stiffness of the section 15, the free ends of the V-shape are connected at space-apart locations via obliquely oriented connecting strips 29a, 29b. On the inner side of the C-shape, the horizontal parts thereof are provided with guide strips 18, 19. Beside the centre of the width thereof, a narrow slots 35 is provided in the upper horizontal part of the C-shape, parallel to the guide strip 18. Near the end of the fixed arm 10 remote from the movable arm 11, a shaft member 34 extends through the two horizontal parts of the C-shape of the section 15, in such a manner that the fixed arm 10 can freely pivot about the shaft member 34, whose central axis coincides with the aforesaid pivot axis 9. At the ends of the slots 35, gears 23, 24 and 25 of identical diameter are provided. The gears 23 and 24 are mounted on the shaft member 34 above the C-shaped section 15 in such a manner as to be freely rotatable. Consequently, the central axis of the gears 23, 24 coincides with the pivot axis 9. The gears 23 and 24 might also be configured as a common gear having a height corresponding to the joint height of the gears 23 and 24. At the opposite end of the slot 35, the gear 25 is mounted on the upper horizontal part of the C-shaped section 15 in such a manner as to be freely rotatable, with the gears 23 and 25 extending at the same vertical level. At the end of the fixed arm 10 where also the pivot axis 9 is located, the fixed arm 10 is provided with a pulley 12 that is rotatable about an axis of rotation 12a. At the location of the pulley 12, the fixed arm 10 is furthermore provided with parts 16, 17 extending perpendicularly to the longitudinal direction of the fixed arm 10, between which parts a pulley 13 that is rotatable about an axis of rotation 13a is provided.

The movable arm 11 comprises two U-shaped sections 26, 27, the open sides of the U-shapes of which sections 26, 27 are directed downwards and upwards, respectively. The sections are interconnected via a vertical connecting beams 28a, 28b, 28c, which are also U-shaped. At their ends facing towards the fixed arm 10, the U-shaped sections 26, 27 are provided at the inner side thereof with sliding shoes 20, 21 and a sliding shoe 22, respectively (the second sliding shoe, which is associated with section 26 and which corresponds to the sliding shoe 21 associated with section 27, is not shown). The sliding shoes 20, 21 are arranged to cooperate with the guide strip 18, whilst the guide shoe 22 is arranged to cooperate with the guide strip 19. At the end of the section 27 where the guide shoes 20, 21 are provided, the section 27 is provided with a mounting plate 33 between the guide shoes 20, 21 and a vertical upright side of the U-shape of the section 27, which mounting plate extends through the slot 35 of the fixed arm 10 in the assembled condition of the diverter element 6, being movable therethrough upon movement of the movable arm 11 with respect to the fixed arm 10. Approximately at the longitudinal position of the sliding shoe 20, the section 27 is furthermore provided at the bottom side thereof with a downwardly extending shaft hub 32. During the sliding cooperation between the fixed arm 10 and the movable arm 11, the hub 32 is positioned between the connecting strips 29a, 29b. At the ends of the sections 26, 27 remote from the ends where the sliding shoes 20, 21, 22 are present, the sections 26, 27 are provided with extension strips 36, 37 attached thereto, between the free ends of which the pulley 14 is mounted in such a manner as to be freely rotatable about the axis of rotation 14a.

The diverting device 5 comprises a table 8, on which several components of the diverting device 5 are movably or immovably mounted. A pulley 38 is provided on the table 8, which pulley is rotatable about a vertical axis of rotation 38a and which has the same height as the pulleys 12, 13, 14. The pulley 38 is rotatably driven by an electric motor (not shown) at the bottom side of the table 8. In addition to that, the table 8 is provided with a slot 39 and, parallel thereto, with a guide strip 40 along which a slide 41 can move reciprocatingly. The slide 41 comprises a pulley 42, which is freely rotatable about a vertical axis of rotation 42a. The diverting device 5 furthermore comprises two gears 43, 44 that extend above the slide 41, viz. at the same vertical level as the gear 24. A toothed belt 45 is passed over the gears 24, 43, 44 in such a manner as to extend in the form of a triangle. The toothed belt 45 is fixedly connected to the slide 41 via a corner joint 46. A toothed belt 47 is passed over the gears 23, 25, which belt is fixedly connected to the mounting plate 33, and thus to the movable arm 11, by means of a mounting plate 48.

The diverting device 5 furthermore comprises an actuator arm 49, which is freely rotatably connected to the hub 32 at one end. The arm 49 is rigidly connected to a vertical shaft member 50, which is in turn connected at the bottom side of the table 8 to a crank-drive shaft mechanism 51 (see figures 2a and 2b), which is driven by an electric motor 52.

The diverting device 5 furthermore comprises a vertically oriented guide belt 30, which is passed over the pulleys 12, 13, 14, 38, 42. The guide belt 30 is driven via the drive of the pulley 38 in the direction indicated by the arrow 53, i.e. in the direction in which the guide element 6 discharges products from the conveyor belt 4 in the active position, with a component in the direction of transport 7. Preferably, said component is of the same magnitude as the conveying velocity of the belt conveyor 1.

The diverting device 5 operates as follows: starting from the passive position of the diverter element 6, in which products present on the conveyor belt 4 can pass the diverging device 5 without impediment, the electric motor 52 receives an activating signal from control means (not shown) at some point triggered by the fact that a product on the conveyor belt 4 that is to be diverted sideways from the conveyor belt 4 is approaching the diverging device 5. In response thereto, the electric motor 52 is energised, as a result of which the actuator arm 49 is pivoted via the crank-drive shaft mechanism 51 and the shaft member 50 from the position that is shown in figure 1a, for example, to the position that is shown in figure 2a. Because of the engagement of the actuator arm 49 on the movable arm 11 of the diverter element 6, the diverter element 6 will pivot as a whole from the passive position as shown in figure 1a to the active position as shown in figure 2a, whilst in addition the movable part 11 of the fixed arm 10 moves away from the diverter element 6 in the longitudinal direction thereof, causing the distance between the pivot axis 9 for the diverter element 6 and the pulley 14 to increase. The length along which the diverter element 6 extends as a result thereof suffices to cover the full width of the conveyor belt 4, which would not be possible with the length that the diverter element 6 takes up in the passive position.

As a result of the extension of the movable arm 11, also the toothed belt 47 is driven, since the movable arm 11 and the toothed belt 47 are connected via connecting plates 33, 48. Consequently, the toothed belt 23 will rotate about its axis of rotation and thus impart such a rotation to the gear 24 as well. Subsequently, the toothed belt 45 is driven via the gear 24, with the toothed belt 45 causing the slide 41 to move from a starting position as shown in figures 3a, 1a to an end position as shown in figures 3b, 2a. As a result of the movement of the slide 41 from the starting position to the end position, the length of the path along which the guide belt 30 extends past the five pulleys 14, 38, 42, 30, 12 remains constant, so that it is ensured that the belt 30 will continue to be driven via the pulley 38. In order to make it possible to compensate for minimal differences in the path length of the guide belt 30 between the passive position and the active position, it is possible, if desired, to configure the slide 41 with resilient means such that the tension in the guide belt 30 can remain substantially the same.

Exactly the opposite takes place upon movement of the diverter element 6 from the active position to the passive position once the product in question has been diverted from the conveyor belt 4 (and the next product is not intended for being diverted from the conveyor belt 4). The driving motor 52 causes the actuator arm 49 to pivot via the crank-drive shaft mechanism 51 from the position that is shown in figure 2a back to the position that is shown in figure 1a, with the movable arm 11 being moved back into the fixed arm 10 of the diverter element 6 on the one hand and the diverter element 6 as a whole pivoting back to the passive position that is shown in figure 1 a. Because of the transmission between the toothed belts 45 and 47 via the gears 23, 24, the slide 41 will furthermore return to the starting position again, so that the situation as shown in figure 1 a applies again.

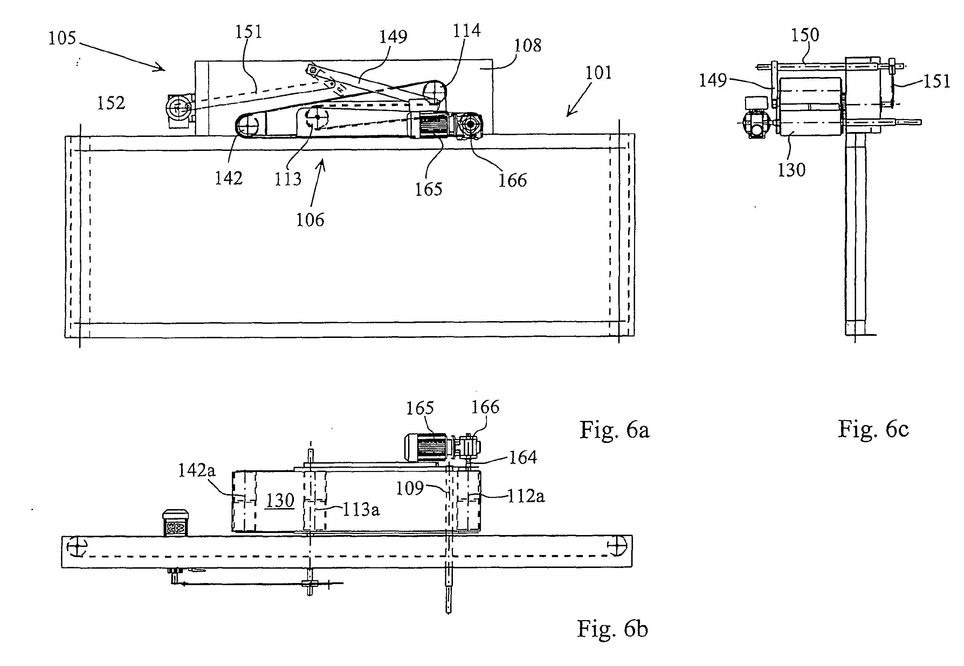

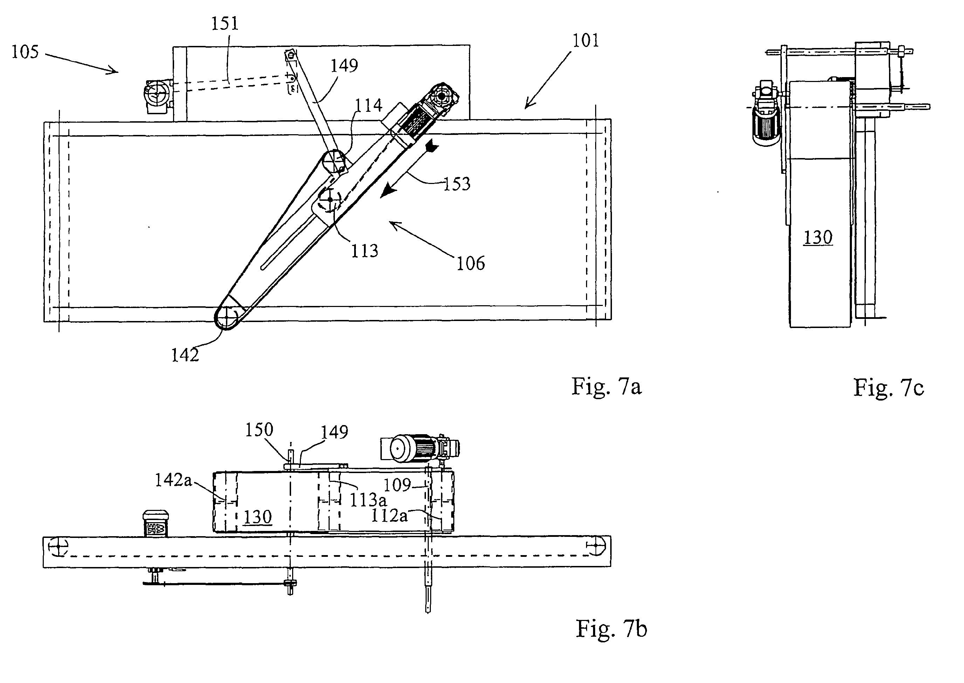

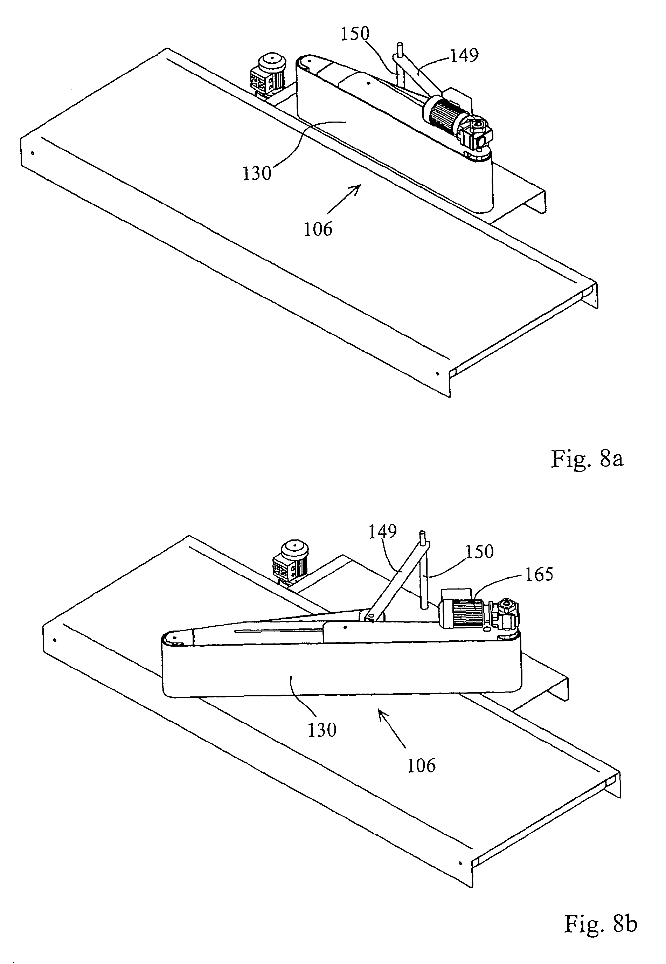

Figures 6a-10 relate to a second preferred embodiment of a device according to the present invention. Figures 6a-6c and figure 8a show the device in the passive position thereof, whilst figures 7a-7c and figure 8b show the device in the active position thereof.

The device comprises a belt conveyor 101 and the diverging device 105. The belt conveyor 101 is comparable to the belt conveyor 1 and requires no further explanation.

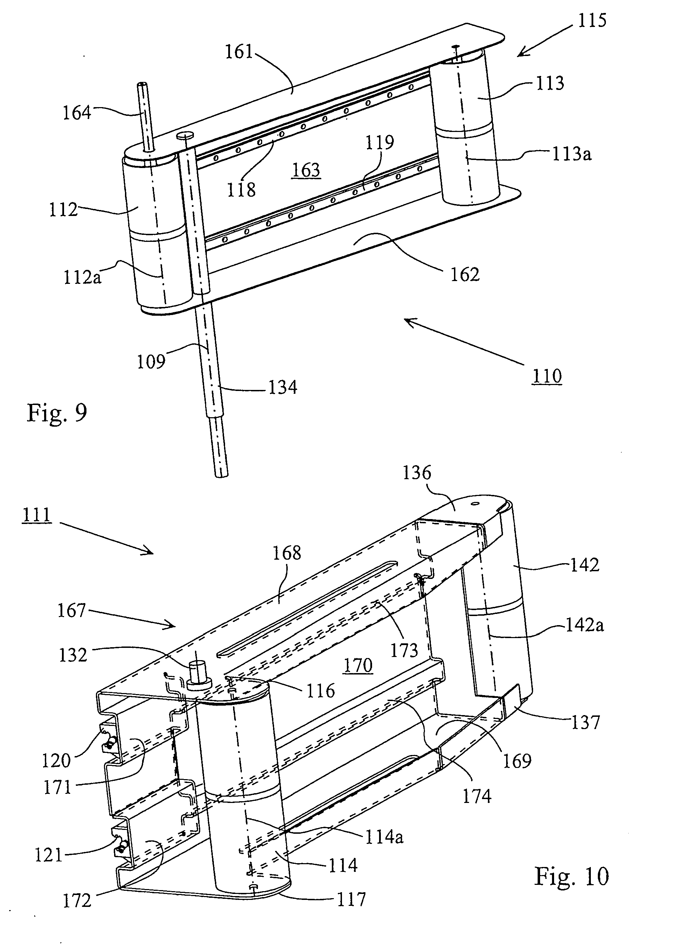

The diverging device 105 comprises the diverter element 106, which is pivotable about a pivot axis 109 between the passive position and the active position. The diverter element 106 comprises a fixed arm 110 (see figure 9) and an arm 111 (figure 10) which is movable with respect to the fixed arm 110. The fixed arm 110 comprises a laterally oriented U-shaped section 115 having an upper horizontal part 161, a lower horizontal part 162 and a vertical part 163 that interconnects the two horizontal parts 161, 162. Pulleys 112, 113 are provided at both ends of the U-shaped section 115, which pulleys are rotatable about axes of rotation 112a, 113a, respectively. A shaft member 164 extends above the horizontal part 161, which shaft member is rigidly connected to the pulley 112. Mounted on the horizontal part 161 is an electric motor 155 comprising a transmission 166 for rotating the pulley 112 via the shaft member 164. Guide strips 118, 119 are mounted to the vertical part 163 on the inner side of the U-shaped section 115, which guide strips extend in slightly spaced-apart parallel relationship in the longitudinal direction of the U-shaped section 115. A shaft member 134, whose central axis coincides with the aforementioned pivot axis 109, extends through the horizontal parts 161, 162 of the U-shaped section 115 near the pulley 112. The shaft member 134 is rigidly connected to the U-shaped section 115 and extends below the lower horizontal part 162 to a significant extent, so that the journalling of the shaft member 134 for rotation of the diverter element 106 about the pivot pin 109 can take place below the horizontal part 162.

The movable arm 111 (figure 10) comprises a section 157 of substantially C-shaped cross-section, which cross sectional configuration is not entirely constant along the length of the section 167. The section 167 is substantially made up of an upper horizontal part 168 and a lower horizontal part 169, which are interconnected via a vertical part 170. The horizontal parts 168, 169 are wider on the sides of the section 157 that face towards the fixed arm 110, thus forming projecting parts 116, 117, between which the pulley 114 is freely rotatable about a vertical axis of rotation 114a. At the same end, the vertical part 170 is provided with two recessed parts 171, 172. At the outer side of the section 167, guide shoes 120, 121 are provided within the recessed parts 171, 172 for guiding cooperation with the guide strips 118, 119, respectively. A vertical hub 132 is rigidly attached to the upper side of the horizontal part 168. Recessed parts 173, 174 collinear with the recessed parts 171, 172 are provided along the part of the length of the section 167 where no recessed parts 171, 172 are present, which recessed parts 173, 174 are narrower than the recessed parts 171, 172 and which are intended to provide space for the guide strips 118, 119. At the end of the section 167 opposite the pulley 114, extension strips 136, 137 are provided on the horizontal parts 168, 169, between which the pulley 142 is freely rotatable about the vertical axis of rotation 142a.

In the assembled condition of the diverter element 106, the horizontal parts 161, 162 of the fixed arm 110 extend at the outer side of the respective horizontal parts 168, 169 of the movable arm 111.

The diverter element 106 furthermore comprises an endless guide belt 130, which is passed over the pulleys 112, 113, 114, 142 and which is driven in the direction indicated by the arrow 153 by the action of the electric motor 165.

The diverter element 106 furthermore comprises an actuator arm 149, which is rotatably connected at one end to the shaft hub 132 and which is rigidly connected at the opposite end to the shaft member 150, which is in turn connected at the bottom side of the table 108 to a crank-drive shaft mechanism 151 that is driven by the electric motor 152.

The operation of the device is as follows: once a control system (not shown) has determined that a product that is approaching the diverter element on the belt conveyor 101 is to be diverted sideways therefrom, the diverter element 106 must be moved from the passive position to the active position. The electric motor 152 is to that end energised, with the outgoing shaft of said electric motor rotating half a revolution, causing the actuator arm 149 to pivot through about 45° about the central axis of the shaft member 150. The result is that on the one hand the movable arm 111 moves outwards with respect to the fixed arm 110, whilst on the other hand the diverter element 106 as a whole pivots about the pivot axis 109. Once the product in question has been diverted from the belt conveyor 101, the electric motor can rotate a next half revolution, causing the diverter element 106 to pivot back to the passive position, whilst in addition the diverter element assumes its original length again. Suitable timing makes it possible to achieve that the electric motor 152, after having rotated the first half revolution, will not stop once the diverter element 106 has reached the active position but will immediately proceed with the second half revolution, so that the diverter element 108, too, will immediately pivot back to the passive position again without stopping.

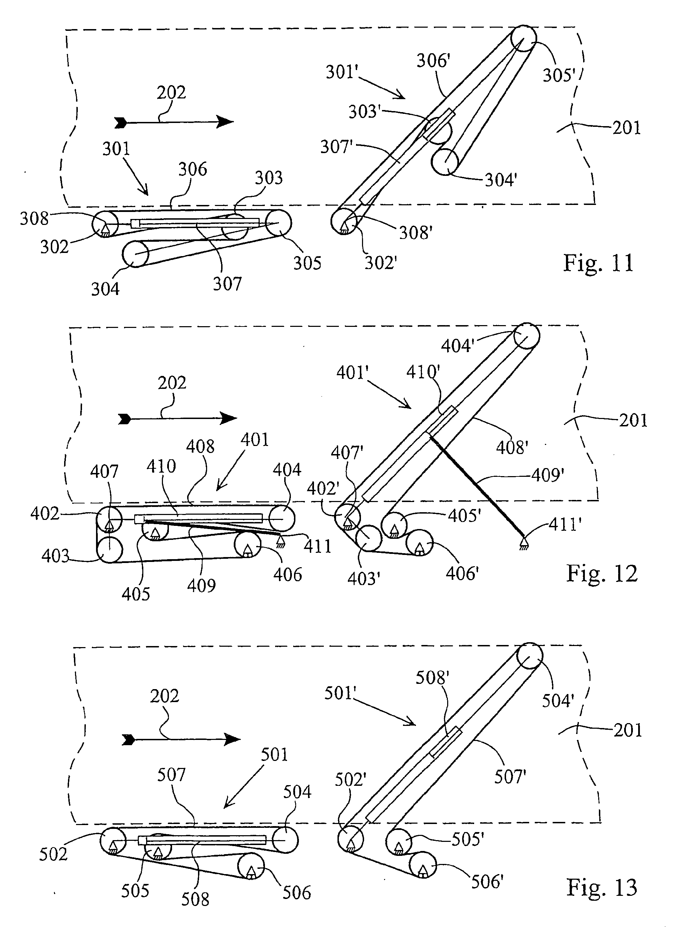

Figures 11-13 schematically show three embodiments of a device not forming part of the present invention. All the figures show a conveyor 201 for conveying products thereon in the direction indicated by the arrow 202. Each of the figures 11-13 shows the diverter element both in the passive position and downstream in the active position; in the active position the same numerals are used as in the passive position, with the addition of an apostrophe, however.

The embodiment that is shown In figure 11 not forming part of the present invention, shows a great deal of resemblance with the embodiment that is shown in figures 6a-10. The diverter element 301 comprises pulleys 302, 303, 304, 305, with the pulleys 302 and 303 forming part of a base part of the diverter element 301 and the pulleys 304 and 305 forming part of a part of the diverter element that is movable with respect to the base part. A guide belt 306 is passed over the pulleys 302, 303, 304, 305, which guide belt is driven via the drive of one of the pulleys, of which the pulleys 302 and 303 are most likely to be used for this purpose. Using the directly drivable, active piston-cylinder combination 307, the distance between the pulleys 302 and 305 can be changed by moving the movable arm with respect to the fixed arm of the diverter element 301.

An important difference between the embodiment that is shown in figure 11 and the embodiments that are shown in figures 6a-10 is the fact that in the embodiment of figure 11 the pivot axis 308 for the diverter element 301 coincides with the central axis of the pulley 302. Unlike the first and the second preferred embodiment, pivoting of the diverter element 301 about the central axis of the pulley 302 does not take place by means of an active actuator arm (which would also be possible), but by means of a drive unit which acts directly on the shaft that extends through the central axis of the pulley 302, to which shaft the diverter element 301 is rigidly connected.

The diverter element 401 that is shown in figure 12 comprises three pulleys 402, 403, 404, of which pulleys the pulleys 402, 403 form part of a fixed arm of the diverter element 401, whilst the pulley 404 forms part of an arm of the diverter element 401 that is movable with respect to the fixed arm. In addition to that, a fixed pulley 405 is provided, which is comparable to the pulley 38 that is used in the first preferred embodiment, and the pulley 406, which forms part of a slide and which can move reciprocatingly in a manner that is comparable to the manner In which the pulley 42 that is used In the first preferred embodiment reciprocates. A guide belt 408 is passed over the five pulleys 402, 403, 404, 405, 406. Pivoting of the diverter element 401 about the central axis of the pulley 402 takes place in a manner which is comparable to the pivoting in the embodiment that is shown in figure 11, viz. via a driven shaft that extends concentrically with the central axis of the pulley 402.

A difference between the embodiment of figure 12 and the first preferred embodiment of figures 1a-5 is the fact that the pivot axis 407 for the diverter element 401 coincides with the central axis of the pulley 402. A difference with the embodiment of figure 11 Is the piston-cylinder combination 410 which, in contrast to the piston-cylinder combination 307, is passive by nature. Extension of the piston of the piston-cylinder combination 410 takes place by means of the arm 409, which arm moves along and is connected to an end of the piston of the piston-cylinder combination 410 at one end and which can rotate about a vertical axis at another end, at the location indicated by numeral 411. Pivoting of the diverter element 401 causes the arm 401 to pivot as well, as a result of which the piston-cylinder combination 410 and thus the pulley 404 is extended.

In the embodiment comprising the guide belt 507 that is shown in figure 13, not forming part of the present invention, the fixed arm of the diverter element 501 comprises only one pulley 502, in contrast to the embodiment of figure 12, the central axis of which pulley 502 coincides with the pivot axis for the diverter element 501. For the rest the pulleys 604, 605 and 506 are absolutely comparable to the pulleys 404, 405 and 406 in figure 12. Like the piston-cylinder combination 307 of figure 11, the piston-cylinder combination 508 is in the active position.

## Claims

1. A device for selectively diverting products sideways from load-bearing conveying surface (4) of a conveyor (1;101;201), comprising a diverter element (6;106) provided with a guide belt (30;130) that can be driven by drive means (165), which belt is passed over two pulleys (14,12;142;112) at ends of the diverter element, which pulleys are rotatable about vertical axes of rotation, one of which two pulleys (12;112) is rotatable with respect to a base part (10;110) of the diverter element and the other of which two pulleys (14;142) is rotatable with respect to a part (11;111) of the diverter element that is movable with respect to the base part in the longitudinal direction thereof, pivoting means (52;152) for pivoting the diverter element reciprocatingly about a vertical pivot axis (9;109) extending on one side of the conveyor, between a passive position, in which the diverter element extends beside the conveying surface so as to allow products on the conveying surface to pass freely, and an active position, in which the diverter element extends at least partially above the conveying surface for diverting products on the conveying surface sideways from said conveying surface, and length-adjusting means (10-22;118-221) for increasing the distance between the pivot axis and one end of the diverter element upon pivoting from the passive position to the active position and decreasing the distance between the pivot axis and the end of the diverter element upon pivoting from the active position to the passive position, wherein the movable part of the diverter element moves with respect to the base part of the diverter element so as to increase or decrease the distance between the pivot axis and the end of the diverter element, wherein the device comprises an actuating element (49;149) that engages the diverter element, which actuating element can be moved between a first position and a second position by moving means (52;152) so as to cause the diverter element to pivot between the passive position and the active position under the Influence of the movement of the actuating element between the first position and the second position, and/or to increase or decrease the distance between the pivot axis and one end of the diverter element, wherein the actuating element (49;149) is pivotable about a first further vertical pivot axis (50;150) between said first position **characterized in that** said actuating element engages the movable part of the diverter element and **in that** said first further vertical pivot axis is located between the ends of the diverter element, seen in the direction of transport of the conveyor.

2. A device according to claim 1; **characterized in that** said first further vertical pivot axis is located on the same side of the conveyor as the vertical pivot axis.

3. A device according to claim 2, **characterized in that** the diverter element (6; 106) pivots in the opposite direction between the passive position and the active position when the actuating element (49;149) pivots between the first position at the second position.

4. A device according to any one of the preceding claims, **characterized in that** the entire actuating element (49;149) extends between the ends of the diverter element, seen in the direction of transport.

5. A device according to any one of the preceding claims, **characterized in that** the actuating element (49;149) is at least substantially elongated in shape.

6. A device according to any one of the preceding claims, **characterized in that** the actuating element (49;149) is at least substantially rectilinear in shape.

7. A device according to any one of the preceding claims, **characterized in that** the actuating element is made up of a rigid arm (49;149),

8. A device according to any one of the preceding claims, **characterized i**n that the engagement by the actuating element (49;149) on the movable part (11;111) of the diverter element (6;106) takes place on a side of the movable part of the diverter element that faces towards the pivot axis (9;109).

9. A device according to any one of the preceding claims, **characterized i**n that the guide belt (30;130) is an endless belt.

10. A device according to any, one of the preceding claims **characterized in that** the guide belt (30;130) is passed at least over a third pulley (42;114) which is rotatable about a vertical axis of rotation and which is movable between a starting position and an end position for keeping the length of the path along which the guide belt moves at least substantially constant during said increasing or decreasing of the distance between the pivot axis and one end of the diverter element (6;106).

11. A device according to claim 10, **characterized in that** the third pulley (42) can move reciprocatingly beside the conveying surface (4) between the starting position and the end position.

12. A device according to claim 10 or 11, **characterized in that** the device furthermore comprises mechanical transmission means (40;41) for moving the third pulley (42) between the starting position and the end position in response to the Increase or decrease of the distance between the pivot axis and one end of the diverter element.

13. A device according to claim 12, **characterized in that** the transmission means comprise a first transmission gear (22), a first transmission element (47), a second transmission gear (24) and a second transmission element (45), wherein the first transmission element is connected to the movable part (11) of the diverter element on the one hand and co-operates with the first transmission gear on the other hand, the second transmission element is connected to the third pulley (42) on the one hand and to the second transmission gear on the other hand, and wherein the first transmission gear and the second transmission gear are arranged for joint rotation.

14. A device according to claim 13, **characterized in that** the first transmission gear (23) and the second transmission gear (24) are collinear.

15. A device according to claim 14, **characterized in that** the first transmission gear (23) and the second transmission gear (24) are made up of one common transmission gear.

16. A device according to claim 13, 14, or 15, **characterized in that** at least one of said first transmission gear (23) and said second transmission gear (24) is collinear with the pivot axis (9).

17. A device according to any one of the claims 13-16, **characterized in that** at least one of said first transmission element (47) and said second transmission element (45) is of an elongated, flexible type.

18. A device according to claim 17, **characterized in that** said at least one elongated, flexible transmission element is an endless element.

19. A device according to any one of the preceding claims, **characterized in that** the movable part (111) and the base part (110) each comprise two pulleys (114;142;112;113).

20. A device according to claim 19, **characterized in that** the two pulleys (114;142;112;113) of the base part (110) and/or of the movable part (111) are positioned at fixed positions relative to each other.

21. A device according to any one of the preceding claims, **characterized in that** the diverter element (6, 106) extends over the full width of the conveyor in the active position.

## Patentansprüche

1. Gerät zum selektiven Umleiten von Erzeugnissen seitwärts von einer tragenden Förderfläche (4) eines Förderers (1; 101; 201), umfassend ein Umleiterelement (6; 106), das mit einem Führungsriemen (30; 130) versehen ist, der durch ein Antriebsmittel (165) angetrieben sein kann, wobei der Riemen über zwei Riemenscheiben (14, 12; 142, 112) an Enden des Umleiterelements gelegt ist, wobei die Riemenscheiben um vertikale Drehachsen drehbar sind, wobei eine der zwei Riemenscheiben (12; 112) bezüglich eines Grundteils (10; 110) des Umleiterelements drehbar ist und die andere der zwei Riemenscheiben (14; 142) bezüglich eines Teils (11; 111) des Umleiterelements drehbar ist, das bezüglich des Grundteils in der Längsrichtung davon beweglich ist, Schwenkmittel (52; 152) zum Hin- und Herschwenken des Umleiterelements um eine vertikale Schwenkachse (9; 109), die auf einer Seite des Förderers verläuft, zwischen einer passiven Position, in der das Umleiterelement neben der Förderfläche verläuft, um zu ermöglichen, dass Erzeugnisse auf der Förderfläche frei durchlaufen, und einer aktiven Position, in der das Umleiterelement zumindest teilweise über der Förderfläche zum Umleiten von Erzeugnissen auf der Förderflache seitwärts von der Förderfläche verläuft, und Längeneinstellmittel (18 bis 22; 118 bis 121) zum Vergrößern des Abstands zwischen der Schwenkachse und einem Ende des Umleiterelements auf das Schwenken aus der passiven Position in die aktive Position hin und Verringern des Abstands zwischen der Schwenkachse und dem Ende des Umleiterelements auf das Schwenken aus der aktiven Position in die passive Position hin, wobei sich das bewegliche Teil des Umleiterelements bezüglich des Grundteils des Umleiterelements zum Vergrößern oder Verringern des Abstands zwischen der Schwenkachse und dem Ende des Umleiterelements bewegt, wobei das Gerät ein Betätigungselement (49; 149) umfasst, das das Umleiterelement einstellt, wobei das Betätigungselement durch Bewegungsmittel (52; 152) zwischen einer ersten Position und einer zweiten Position beweglich ist, um zu bewirken, dass das Umleiterelement zwischen der passiven Position und der aktiven Position unter der Einwirkung der Bewegung des Betätigungselements zwischen der ersten und der zweiten Position schwenkt, und/oder um den Abstand zwischen der Schwenkachse und einem Ende des Umleiterelements zu vergrößern oder zu verringern, wobei das Betätigungselement (49; 149) um eine erste weitere senkrechte Schwenkachse (50; 150) zwischen der ersten Position und der zweiten Position schwenkbar ist, **dadurch gekennzeichnet, dass** das Betätigungselement das bewegliche Teil des Umleiterelements einstellt, und dass sich die erste weitere vertikale Schwenkachse bei Betrachtung in der Transportrichtung des Förderers zwischen den Enden des Umleiterelements befindet.

2. Gerät nach Anspruch 1, **dadurch gekennzeichnet, dass** sich die erste weitere vertikale Schwenkachse auf derselben Seite des Förderers wie die vertikale Schwenkachse befindet.

3. Gerät nach Anspruch 2, **dadurch gekennzeichnet, dass** das Umleiterelement (6; 106) in der Gegenrichtung zwischen der passiven und der aktiven Position schwenkt, wenn das Betätigungselement (49; 149) zwischen der ersten Position und der zweiten Position schwenkt.

4. Gerät nach einem der vorhergehenden Ansprüche, **dadurch gekennzeichnet, dass** das gesamte Betätigungselement (49; 149) bei Betrachtung in der Transportrichtung zwischen den Enden des Umleiterelements verläuft.

5. Gerät nach einem der vorhergehenden Ansprüche, **dadurch gekennzeichnet, dass** das Betätigungselement (49; 149) im Wesentlichen eine gestreckte Form aufweist.

6. Gerät nach einem der vorhergehenden Ansprüche, **dadurch gekennzeichnet, dass** das Betätigungselement (49; 149) im Wesentlichen eine geradlinige Form aufweist.

7. Gerät nach einem der vorhergehenden Ansprüche, **dadurch gekennzeichnet, dass** das Betätigungselement aus einem starren Arm (49; 149) gebildet ist.

8. Gerät nach einem der vorhergehenden Ansprüche, **dadurch gekennzeichnet, dass** die Einstellung des beweglichen Teils (11; 111) des Umleiterelements (6; 106) durch das Betätigungselement (49; 149) auf einer Seite des beweglichen Teils des Umleiterelements erfolgt, die der Schwenkachse (9; 109) zugekehrt ist.

9. Gerät nach einem der vorhergehenden Ansprüche, **dadurch gekennzeichnet, dass** der Führungsriemen (30; 130) ein Endlosriemen ist.

10. Gerät nach einem der vorhergehenden Ansprüche, **dadurch gekennzeichnet, dass** der Führungsriemen (30; 130) zumindest über eine dritte Riemenscheibe (42; 114) gelegt ist, die um eine vertikale Drehachse drehbar ist, und die zwischen einer Anfangsposition und einer Endposition beweglich ist, um die Länge des Wegs, den sich der Führungsriemen entlangbewegt, während des Vergrößerns oder Verringerns des Abstands zwischen der Schwenkachse und einem Ende des Umleiterelements (6; 106) im Wesentlichen konstant zu erhalten.

11. Gerät nach Anspruch 10, **dadurch gekennzeichnet, dass** sich die dritte Riemenscheibe (42) neben der Förderfläche (4) zwischen der Anfangsposition und der Endposition hin- und herbewegen kann.

12. Gerät nach einem der Ansprüche 10 oder 11, **dadurch gekennzeichnet, dass** das Gerät zudem mechanische Übertragungsmittel (40; 41) zum Bewegen der dritten Riemenscheibe (42) zwischen der Anfangsposition und der Endposition in Reaktion auf die Vergrößerung oder Verringerung des Abstands zwischen der Schwenkachse und einem Ende des Umleiterelements umfasst.

13. Gerät nach Anspruch 12, **dadurch gekennzeichnet, dass** die Übertragungsmittel ein erstes Getriebe (23), ein erstes Übertragungselement (47), ein zweites Getriebe (24) und ein zweites Übertragungselement (45) umfassen, wobei das erste Übertragungselement einerseits mit dem beweglichen Teil (11) des Umleiterelements verbunden ist und andererseits mit dem ersten Getriebe zusammenwirkt, das zweite Übertragungselement einerseits mit der dritten Riemenscheibe (42) und andererseits mit dem zweiten Getriebe verbunden ist, und wobei das erste Getriebe und das zweite Getriebe zur gemeinsamen Drehung angeordnet sind.

14. Gerät nach Anspruch 13, **dadurch gekennzeichnet, dass** das erste Getriebe (23) und das zweite Getriebe (24) kollinear sind.

15. Gerät nach Anspruch 14, **dadurch gekennzeichnet, dass** das erste Getriebe (23) und das zweite Getriebe (24) als ein gemeinsames Getriebe gebildet sind.

16. Gerät nach einem der Ansprüche 13, 14 oder 15, **dadurch gekennzeichnet, dass** zumindest eines des ersten Getriebes (23) und des zweiten Getriebes (24) mit der Schwenkachse (9) kollinear ist.

17. Gerät nach einem der Ansprüche 13 bis 16, **dadurch gekennzeichnet, dass** zumindest eines des ersten Übertragungselements (47) und des zweiten Obertragungselements (45) von einer gestreckten, flexiblen Art ist.

18. Gerät nach Anspruch 17, **dadurch gekennzeichnet, dass** zumindest ein gestrecktes, flexibles Übertragungselement ein Endloselement ist.

19. Gerät nach einem der vorhergehenden Ansprüche, **dadurch gekennzeichnet, dass** das bewegliche Teil (111) und das Grundteil (110) jedes zwei Riemenscheiben (114, 142; 112, 113) umfassen.

20. Gerät nach Anspruch 19, **dadurch gekennzeichnet, dass** die zwei Riemenscheiben (114, 142; 112, 113) des Grundteils (110) und/oder des beweglichen Teils (111) an starren Positionen relativ zueinander angeordnet sind.

21. Gerät nach einem der vorhergehenden Ansprüche, **dadurch gekennzeichnet, dass** das Umleiterelement (6; 106) in der aktiven Position über die volle Breite des Förderers verläuft.

## Revendications

1. Dispositif pour faire dévier de façon sélective et dans le plan latéral des produits à partir d'une surface d'acheminement porteuse de charge (4) d'un convoyeur (1 ; 101; 201), comprenant un élément de déviation (6 ; 106) pourvu d'une courroie de guidage (30 ; 130) qui peut être entraînée par un moyen d'entraînement (165), la courroie passant sur deux poulies (14, 12 ; 142, 112) à des extrémités de l'élément de déviation, les poulies étant rotatives autour d'axes de rotation verticaux, l'une des deux poulies (12 ; 112) étant rotative par rapport à une partie de base (10 ; 110) de l'élément de déviation et l'autre des deux poulies (14 ; 142) étant rotative par rapport à une partie (11 ; 111) de l'élément de déviation qui est mobile par rapport à la partie de base dans sa direction longitudinale, un moyen de pivotement (52 ; 152) pour faire pivoter l'élément de déviation en va-et-vient autour d'un axe de pivot vertical (9 ; 109) s'étendant sur un côté du convoyeur, entre une position passive dans laquelle l'élément de déviation s'étend à côté de la surface d'acheminement de façon à permettre aux produits sur la surface d'acheminement de passer librement, et une position active dans laquelle l'élément de déviation s'étend au moins partiellement au-dessus de la surface d'acheminement pour faire dévier dans le plan latéral des produits sur la surface d'acheminement à partir de ladite surface d'acheminement, et un moyen de réglage de longueur (18-22 ; 118-121) pour augmenter la distance entre l'axe de pivot et une extrémité de l'élément de déviation lors du pivotement de la position passive à la position active et pour réduire la distance entre l'axe de pivot et l'extrémité de l'élément de déviation lors du pivotement de la position active à la position passive, où la partie mobile de l'élément de déviation se déplace par rapport à la partie de base de l'élément de déviation de manière à augmenter ou réduire la distance entre l'axe de pivot et l'extrémité de l'élément de déviation, où le dispositif comprend un élément d'actionnement (49 ; 149) qui met en prise l'élément de déviation, l'élément d'actionnement pouvant être déplacé entre une première position et une seconde position par un moyen de déplacement (52 ; 152) de manière à faire pivoter l'élément de déviation entre la position passive et la position active sous l'influence du déplacement de l'élément d'actionnement entre la première position et la seconde position, et/ou à augmenter ou réduire la distance entre l'axe de pivot et l'extrémité de l'élément de déviation, où l'élément d'actionnement (49 ; 149) peut pivoter autour d'un premier axe de pivot vertical supplémentaire (50 ; 150) entre ladite première position et ladite seconde position, **caractérisé en ce que** ledit élément d'actionnement met en prise la partie mobile de l'élément de déviation et **en ce que** ledit premier axe de pivot vertical supplémentaire est situé entre les extrémités de l'élément de déviation, vu dans la direction de transport du convoyeur.

2. Dispositif selon la revendication 1, **caractérisé en ce que** ledit premier axe de pivot vertical supplémentaire est situé du même côté du convoyeur que l'axe de pivot vertical.

3. Dispositif selon la revendication 2, **caractérisé en ce que** l'élément de déviation (6 ; 106) pivote dans la direction opposée entre la position passive et la position active lorsque l'élément d'actionnement (49 ; 149) pivote entre la première position et la seconde position.

4. Dispositif selon l'une quelconque des revendications précédentes, **caractérisé en ce que** l'élément d'actionnement (49 ; 149) dans son ensemble s'étend entre les extrémités de l'élément de déviation, vu dans la direction de transport.

5. Dispositif selon l'une quelconque des revendications précédentes, **caractérisé en ce que** l'élément d'actionnement (49 ; 149) est de forme au moins sensiblement allongée.

6. Dispositif selon l'une quelconque des revendications précédentes, **caractérisé en ce que** l'élément d'actionnement (49 ; 149) est de forme au moins sensiblement rectiligne.

7. Dispositif selon l'une quelconque des revendications précédentes, **caractérisé en ce que** l'élément d'actionnement est constitué d'un bras rigide (49 ; 149).

8. Dispositif selon l'une quelconque des revendications précédentes, **caractérisé en ce que** la mise en prise par l'élément d'actionnement (49 ; 149) sur la partie mobile (11 ; 111) de l'élément de déviation (6 ; 106) a lieu d'un côté de la partie mobile de l'élément de déviation tourné vers l'axe de pivot (9 ; 109).

9. Dispositif selon l'une quelconque des revendications précédentes, **caractérisé en ce que** la courroie de guidage (30 ; 130) est une courroie sans fin.

10. Dispositif selon l'une quelconque des revendications précédentes, **caractérisé en ce que** la courroie de guidage (30 ; 130) passe au moins sur une troisième poulie (42 ; 114) qui est rotative autour d'un axe de rotation vertical et qui est mobile entre une position de départ et une position de fin pour maintenir la longueur du trajet le long duquel se déplace la courroie de guidage sensiblement constante pendant ladite augmentation ou réduction de la distance entre l'axe de pivot et une extrémité de l'élément de déviation (6 ; 106).

11. Dispositif selon la revendication 10, **caractérisé en ce que** la troisième poulie (42) peut se déplacer en va-et-vient à côté de la surface d'acheminement (4) entre la position de départ et la position de fin.

12. Dispositif selon la revendication 10 ou 11, **caractérisé en ce que** le dispositif comprend en outre un moyen de transmission mécanique (40 ; 41) pour déplacer la troisième poulie (42) entre la position de départ et la position de fin en réponse à l'augmentation ou la réduction de la distance entre l'axe de pivot et une extrémité de l'élément de déviation.

13. Dispositif selon la revendication 12, **caractérisé en ce que** le moyen de transmission comprend un premier engrenage de transmission (23), un premier élément de transmission (47), un second engrenage de transmission (24) et un second élément de transmission (45), où le premier élément de transmission est raccordé à la partie mobile (11) de l'élément de déviation d'une part et coopère avec le premier engrenage de transmission d'autre part, le second élément de transmission est raccordé à la troisième poulie (42) d'une part et au second engrenage de transmission d'autre part, et où le premier engrenage de transmission et le second engrenage de transmission sont agencés pour une rotation conjointe.

14. Dispositif selon la revendication 13, **caractérisé en ce que** le premier engrenage de transmission (23) et le second engrenage de transmission (24) sont colinéaires.

15. Dispositif selon la revendication 14, **caractérisé en ce que** le premier engrenage de transmission (23) et le second engrenage de transmission (24) sont constitués d'un engrenage de transmission commun.

16. Dispositif selon la revendication 13, 14 ou 15, **caractérisé en ce qu'**au moins un dudit premier engrenage de transmission (23) et dudit second engrenage de transmission (24) est colinéaire avec l'axe de pivot (9).

17. Dispositif selon l'une quelconque des revendications 13 à 16, **caractérisé en ce qu'**au moins l'un dudit premier élément de transmission (47) et dudit second élément de transmission (45) est de type flexible et allongé.

18. Dispositif selon la revendication 17, **caractérisé en ce que** ledit au moins un élément de transmission flexible et allongé est un élément sans fin.

19. Dispositif selon l'une quelconque des revendications précédentes, **caractérisé en ce que** la partie mobile (111) et la partie de base (110) comprennent chacune deux poulies (114, 142 ; 112, 113).

20. Dispositif selon la revendication 19, **caractérisé en ce que** les deux poulies (114, 142 ; 112, 113) de la partie de base (110) et/ou de la partie mobile (111) sont positionnées à des positions fixes l'une par rapport à l'autre.

21. Dispositif selon l'une quelconque des revendications précédentes, **caractérisé en ce que** l'élément de déviation (6 ; 106) s'étend sur toute la largeur du convoyeur dans la position active.
